# EUROPEAN PATENT SPECIFICATION

(11) **EP 1 270 072 B1**
(45) Date of publication and mention of the grant of the patent: **20.09.2006**
(21) Application number: 02013661.0
(22) Date of filing: 20.06.2002
(51) Int. Cl.: B01J 49/00, A47L 15/42, C02F 1/42, D06F 39/00

(54) **Detecting device of the resins state of a system for reducing the water hardness required for a user apparatus**
Einrichtung zum Erfassen des Harzzustandes eines Systems zur Reduzierung der erforderlichen Wasserhärte in einem Gerät
Dispositif de détection de l' état d'une résine dans un système réduisant la dureté de l'eau pour un appareil utilisateur

(30) Priority: 21.06.2001 IT TO20010602
(43) Date of publication of application: 02.01.2003
(73) Proprietor: T & P S.p.A., 21049 Tradate (Varese) (IT)
(72) Inventor: Carli, Carlo, 21041 Albizzate (VA) (IT); Ghinato, Renzo, 21050 Bisuschio (VA) (IT)
(74) Representative: Dini, Roberto

(56) References cited:
- WO-A-01/18298

## Description

The present invention relates to a detection device of the resins state used in a water softening system for a user apparatus, in particular a household washing machine.

Patent application IT TO99A000738 bearing the name of the same applicant of the present patent application discloses a water softening system for operation of a user apparatus, in particular a household washing machine, utilizing a device for detecting the state of the softening resins and such control methods, according to which the resins regeneration step can be directly controlled, i. e. depending on actual restoration of the resins working efficiency.

Patent application IT TO2000A000012, also in the same name of the applicant of the present patent application discloses an improving solution for such a system and/or device and/or method.

This solution provides the use of a detection device of the resins state, in which a movable element inside the device itself can be moved by means of an electromagnetic element controlled by a programmer, ensuring fluctuation of the sample resins contained in the device for a better contact between the resins and a regenerating brine solution or water from the water system during the wash step after regeneration.

However, if on one hand the use of an electromagnetic element, in particular an electromagnetic coil for the motion of the movable element, will improve the contact of the resins with the brine and/or with the water from the water system, on the other hand its components and the electric wiring from the coil to the programmer are expensive.

Moreover, its activation through an electromechanical programmer requires an additional cam enabled for such a function.

It is the object of the present invention to provide an advantageous solution for such a device capable of overcoming the above drawbacks.

In particular, the present invention will provide a technical solution for safe operation of the detection device of the resins state comprising the container of the sample resins and for their complete regeneration and/or washing during the regeneration process and/or washing of all the resins contained in the softening device.

Therefore, it is the object of the present invention to provide an advantageous solution of such a device, in order to achieve the aims previously mentioned.

In order to achieve such aims, it is the object of the present invention to provide a detection device of the resins state utilized in a water softening system for operation of a user apparatus, in particular a household washing machine, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows schematically a vertical section of a detection device of the resins state of a water softener according to the present invention;
- Fig. 2 shows a perspective view of a detection device of the resins state of a water softener according to the present invention;
- Fig. 3 shows schematically a vertical section of a regeneration tank, according. to the present invention;
- Figs. 4 and 5 show schematically an enlarged partial view of a detail of the regeneration tank, in a first and second working position, according to the present invention;
- Fig. 6 shows schematically a water supply circuit of the detection device of the resins state and of a water softener, for supplying softened water to the wash tub, according to the present invention;
- Fig. 7 shows schematically a water supply circuit of the detection device of the resins state and of a water softener, for resins regeneration, according to the present invention.

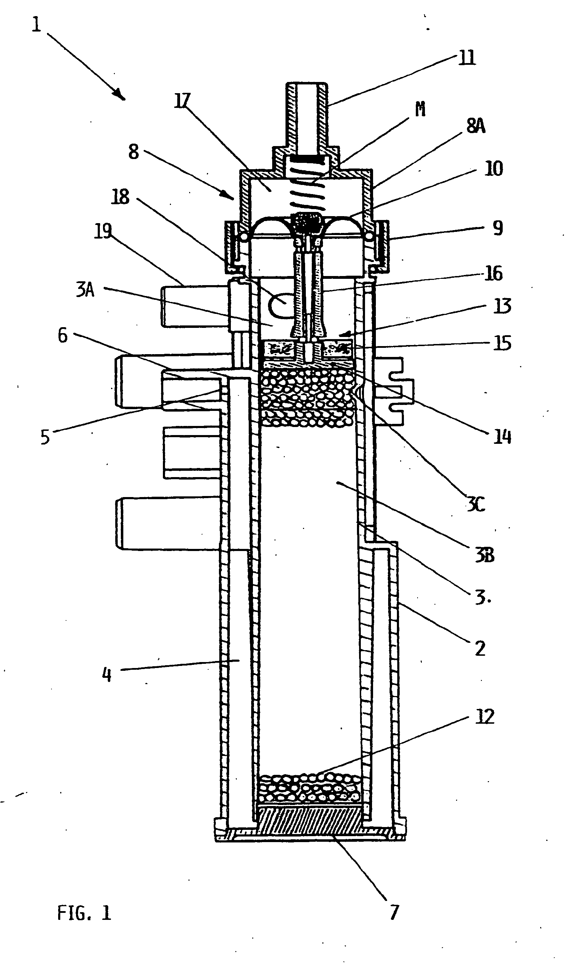

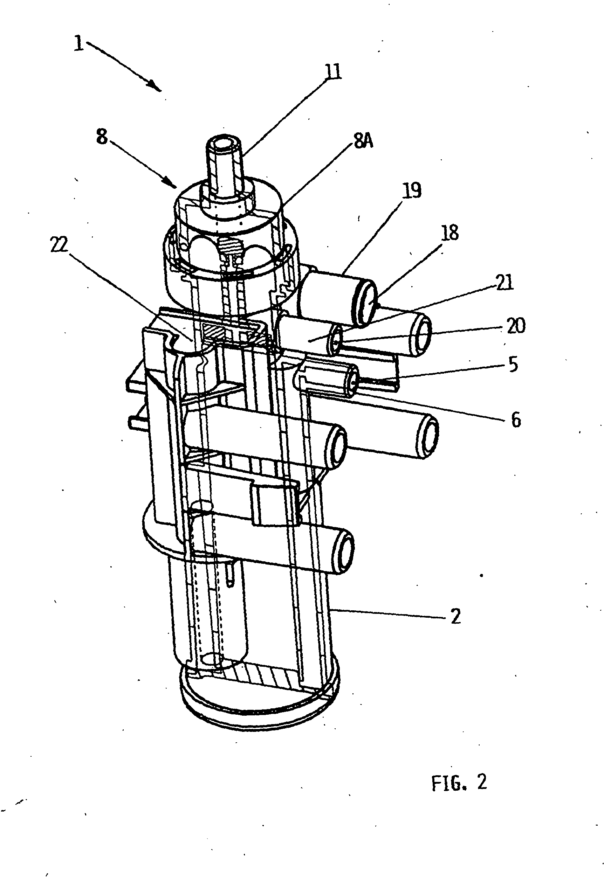

In the Figures 1 and 2, reference 1 indicates as a whole a possible embodiment of the detection device of the resins state utilized in a water softening system, according to the present invention.

Reference 2 indicates the body of the device 1, which has a hollow cylindrical portion 3. Between the hollow cylindrical portion 3 and the outer portion 1 of the body 2, a recess 4 has provided, which has its lower end open, whereas its upper end has a hole 5 and a tube 6 for discharging the water either came from the water system or from a brine container into the tub of the washing machine.

The lower end of the hollow cylindrical portion 3,and of the recess 4 are closed by a cover 7 commonly welded to the edges of both ends, such as hot blade welding. The upper end of the hollow cylindrical portion 3 is closed by a second cover 8, which has a cylindrical portion 8A fastened to the upper end of the hollow cylindrical portion 3 by means of a threaded bushing 9; the end of an elastic membrane 10 interlays between the edge of the cylindrical portion 8A and the edge of the hollow cylindrical portion 3. The membrane 10 and its functions will be better described later. The cover 8 has a tube 11 above the cylindrical portion 8A.

A portion 3B of the cylindrical portion 3 contains the sample resins 12, on which a movable element 13 is resting. Before being introduced into the device 1, the resins 12 are preferably submitted to a typical operation cycle, i.e. exhaustion - regeneration - washing.

The movable element 13 has a base 14, substantially in the form of a pan, whose diameter is such to match with and slide inside the inner diameter of the hollow cylindrical portion 3. The movable element 13 is provided for compacting the sample resins 12 and delimit the compartment in which they are contained.

A permanent magnetic element 15 is located on the base 14 of the movable element 13. This magnetic element 15 is apt to activate with its own magnetic field at least a relay RM, such as fitted with foils enclosed in a glass housing filled with inert gas, commonly called

Reed, on one side of the device 1.

The reed RM is assembled on a sliding element inserted in a seat 22 (see Fig. 2), in a position to be substantially parallel near the outer wall of the body 2. The sliding element can slide vertically in the seat 22 so as to adjust the position of the reed RM for calibration purposes of the device. The vertical movement is commonly obtained through a screw.

The calibration procedure of the device is already described in the patent application IT TO2000A000012 and will not be further described herein.

Activation of the reed RM based on the exhaustion degree of the sample resins 12 contained in the detection device of the resins state 1 as well as the subsequent resins regeneration and wash steps controlled by the reed RM through an electromechanical and/or electronic programmer are not described herein, since they are already disclosed by the above patent applications filed in the name of the same applicant of the present patent.

Reference 16 indicates a rod solidly connected with one end to the base 14 and with the other end to the membrane 10.

The membrane 10 is substantially in the form of a circular ring with a semi-circular section; as previously mentioned, the outer edge of the membrane 10 interlays between the edge of the cylindrical portion 8A of the cover 8 and the edge of the upper end of the hollow cylindrical portion 3, whereas the inner edge of the membrane 10 is tightly fastened to the end of the rod 16 according to common procedures.

Thus, a chamber 17 hydraulically and pneumatically isolated from the recess containing the sample resins 12 and the movable element 13 is obtained between the membrane 10 and the inner portion of the cover 8. Reference 3C indicates an indentation directed inside the portion 3B of the hollow cylindrical portion 3 for stopping the downwards movement of the movable element 13.

An inner portion 3A of the hollow cylindrical portion 3, delimited by the membrane 10 and base 14 of the movable element 13, is hydraulically connected outside through a hole 18 of a tube 19, for water intake from the water system .

The same inner portion 3A has another hole 20 of a tube 21 (see Fig. 2), for adding a regeneration brine for the sample resins 12.

The hollow cylindrical portion 3 and recess 4 are hydraulically interconnected by means of slits, whose dimensions will let the water but not the resins flow through. Also the portion 3A of the cylindrical portion 3 and sample resins 22 are hydraulically interconnected by means of slits provided on the base 14.

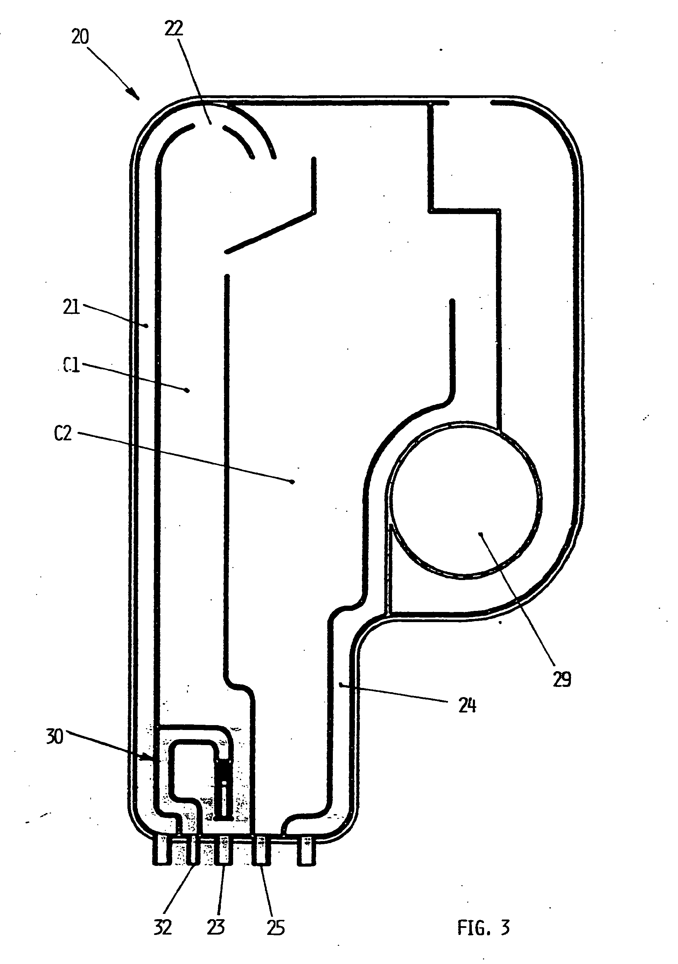

Referring to Fig. 3, reference 20 indicates a multifunctional device for water intake from the water system to the tub of the washing machine through the various components of the water softening system; this multifunctional device has a first duct 21 connected to the water system through a solenoid valve EV, where the water from the water system overcomes first an air-break 22 and flows into a first chamber C1, which is connected to the detection device of the resins state 1 through a duct 23. Upon filling the chamber C1, the difference between the inlet and outlet water volume from the duct 23 causes the water to overflow in a second chamber C2; when the latter is filled, the water overflows into a duct 24 and then further to a wash tub.

The chamber C2 is hydraulically connected through a duct 25 to a salt container 26, whereas the duct 24 is hydraulically connected through a second solenoid valve EV1 to a resins container 27 for the softening of the wash water; the resins container 27 is hydraulically connected to the wash tub 28. The resins container 27 and salt container 26 are an integral part of a softening device D of the wash water.

Water flow from the salt container 26 to the resins container 27 and to the detection device of the resins state 1 will be controlled by the second solenoid valve EV1.

The solenoid valve EV1 is a common four-way solenoid valve, in the specific case with two first ways provided for the wash water flowing from the duct 24 of the multifunctional device 20 to the softening resins container 27, and two second ways for the regeneration brine of the resins flowing from the container 26 to both the softening resins container 27 and detection device of the resins state 1; one of said first ways is connected to one of said second ways to let the brine flow from the container 26 to the container 27 of the softening resins of the wash water.

The multifunctional device 20 also has an opening 29 for venting outside the steam from the wash tub 28.

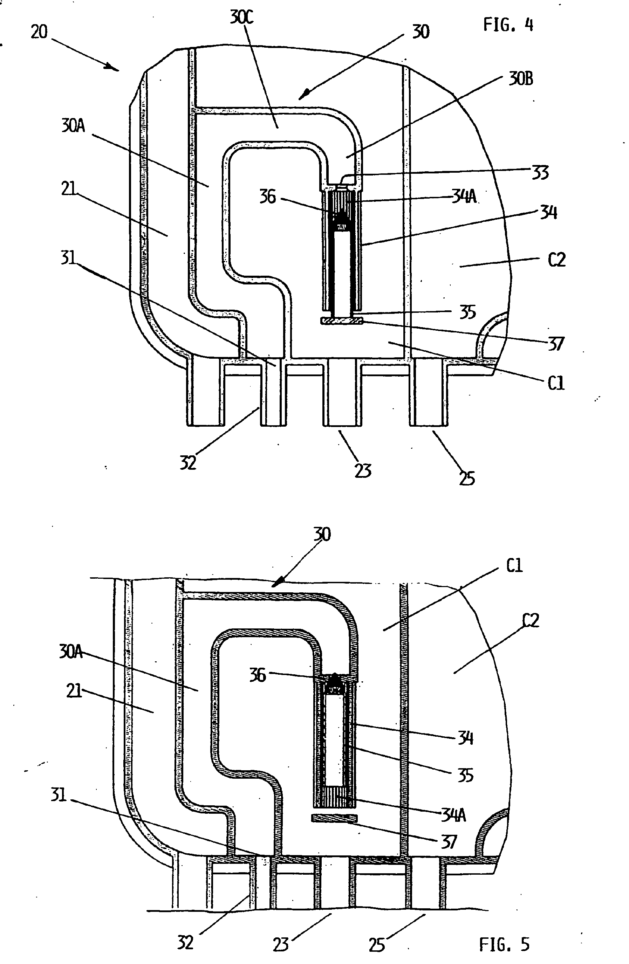

Inside the chamber C1, in its lower portion, there is a duct 30 substantially in the form of an upturned siphon (see Figures 4 and 5); said duct has two vertical lengths 30A and 30B joined in their upper side by a horizontal length 30C; the vertical length 30A has an opening 31 to the outside of the device 20 through a tube 32, whereas the vertical length 30B has an opening 33 on its end, whose diameter is smaller than the diameter of the duct 30.

The opening 33 is connected to the environment of the chamber C1 through a duct 34 connected to the end of the length 30B of the duct 30.

A movable element 35, substantially in the form of a hollow cylinder closed on one end, is sliding inside the duct 34. Reference 36 indicates a small block fastened on top to the closed end of the movable element 35; the small block 36, having substantially a tapered form, is apt to enter the opening 33 and close its passage in a working condition to be further described (see Fig. 5).

Reference 37 indicates a stop of the movable element 35 when the latter is in a rest position (see Fig. 4), i.e. the opening 33 is open.

The duct 31 is connected to the tube 11 of the detection device of the resins state 1 through a small tube T.

Operation of the detection device 1 during the water intake steps in the tub and the resins regeneration steps and subsequent washing, is now described.

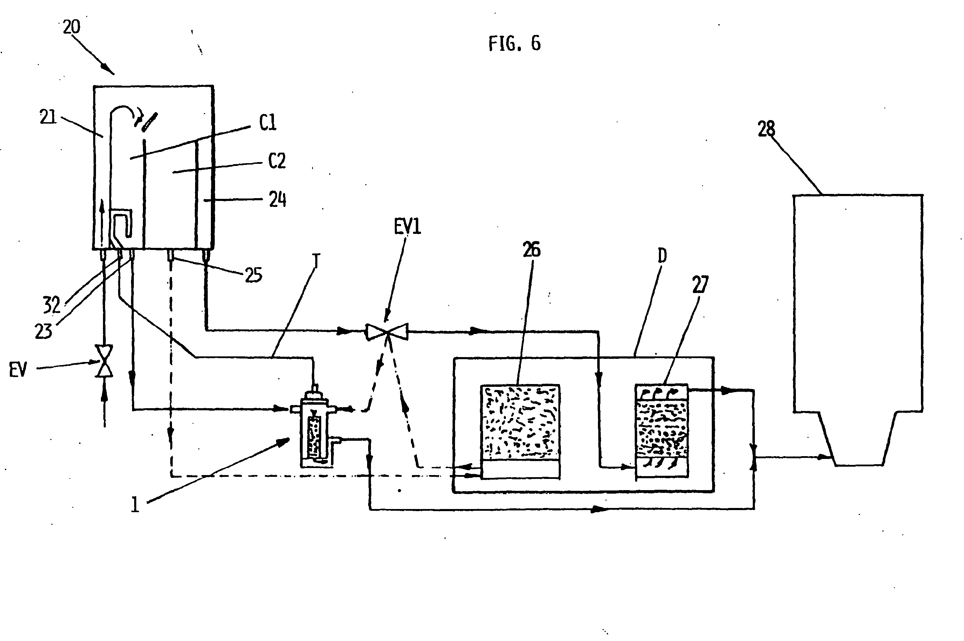

Referring to Fig. 6 representing a water intake step in the tub 28, i.e. with the solenoid valve EV activated by the programmer for the water to flow from the water system to the multifunctional device 20, the hydraulic wash water intake circuit is represented by thick lines, whereas the hatched lines represent a second hydraulic circuit for resins regeneration. The water flowing from the water system through the duct 21 of the multifunctional device 20 reaches the chamber C1 and supplies from here the detection device of the resins state 1 through the duct 23; since the outlet water from the duct 23 has a smaller volume than inlet water, the exceeding water will fill the chamber C1 as previously said and overflow in the chamber C2. Upon filling the chamber C2, the water overflows in the duct 24 and further to the resins container 27, and from here to the tub 28.

The chamber C2 fills up because during this water intake step the second solenoid valve EV1 is enabled to let wash water flow through, but not the brine for resins regeneration; therefore, the water introduced into the chamber C2 cannot flow out of the duct 25.

As previously said, a portion of the water flowing into the chamber C1 flows further to the detection device of the resins state 1 containing the sample resins 12; after flowing through the resins 12, outlet water is directly flown into the tub 28.

Inlet water to the detection device of the resins state 1 through the hole 18 of the tube 19 fills the chamber 3A causing an upward thrust of the elastic membrane 10, which entrains the rod 16 on which the base 14 is fastened. Filling the chamber 3A with a consequent upward thrust of the elastic membrane 10 is obtained through the greater flow-rate of the hole 18 compared to the flow-rate of the passages between the chamber 3A and the chamber containing the sample resins 22.

The upward movement of the base 14 entails an increased volume of the compartment containing the sample resins 12, which are free to fluctuate and improve their contact with the water flowing through them, facilitating a ionic exchange between the calcium and magnesium ions contained in the water and the sodium ions contained in the sample resins 12 for softening the water flowing to the tub 28.

Through the upward movement of the membrane 10, the air contained in the chamber 17 is thrusted out of the tube 11 through the small tube T and the passage 31 reaching the chamber C1 through the duct 30 and relevant opening 33, where it is dispersed.

In order to provide a passage for the air between the movable element 35 and the duct 34, the latter has some scorings 34A, which form a space between the outer surface of the movable element 35 and the inside of the tube 34.

During the filling of the chamber C1 due to the different volume of the inlet and outlet water through the duct 23, as mentioned above, the level increase of the water in the chamber C1 involves the movable element 35, which is displaced in the duct 34 until its tapered end 36 reaches the opening 33, and closes the air flow from the detection device of the resins state 1 through the small tube T following the upward movement of the elastic membrane 10.

Closing the opening 33 hinders the water in the chamber C1 from flowing out in the device 1 through the small tube T and fill the chamber 17 with water, with a consequent hindrance to the movement of the elastic membrane 10. Moreover, closing the hole 33 generates a condition where the elastic membrane 10 maintains the position reached with the water entering the chamber 3A and is unable to return to its original position; in order to go back to its original position, the elastic membrane would actually have to suct the air through the opening 33, but the closed opening through the tapered end 36 of the movable element 35 hinders it.

When water inlet from the water system is stopped by the programmer through deactivation of the solenoid valve EV at the end of the wash water intake cycle, the multifunctional device 20 will be in the condition of having both the chamber C1 and chamber C2 filled with water.

The water contained in the chamber C1 flows out of the duct 23 to the detection device of the resins state 1 until it is emptied, whereas the water contained in the chamber C2 remains in the multifunctional device 20 because the second solenoid valve EV1 is still in its closed condition to let the brine for resins regeneration flow through.

The water contained in the chamber C1 keeps the opening 33 still closed by means of the movable element 35, until its level will allow downward displacement of the movable element to strike against the stop 37, and release the opening 33 for the membrane 10 to go back to its original rest position.

Thus, the sample resins 12 contained in the detection device of the resins state 1 were practically able to fluctuate for improving their contact with the water from the water system up to a complete emptying of the chamber C1.

Moreover, water supply to the detection device of the resins state 1 through the chamber C1 of the multifunction device 20, allows dosing the water volume flowing through the device 1 to have it proportionally smaller than the volume flowing through the container 27; this because the device 1 contains a smaller quantity of resins than the container 27.

Thus, resins exhaustion in the device 1 and in the container 27 will be substantially equivalent; as a result, detecting exhaustion of the sample resins 12 activating the reed RM through the magnetic field of the magnetic element 15 will substantially equal exhaustion of the resins in the container 27 for a value equal to the calibration value of the device 1, e.g. 70%.

The return of the membrane 10 to its rest position is favoured by an elastic element M, such as a spring, located in the chamber 17; the return of the membrane 10 to its rest position causes the base 14 with the magnetic element 15 to lay on the sample resins 12 for compacting them to a new position due to the resins contraction following their exhaustion. During the washing machine operation, in fact, as the resins gradually become exhausted and their volume smaller, the movable element 13 goes more and more downwards, also displacing the magnetic element 15, which causes the closure of the reed RM when its magnetic field is in line with it.

The closure of the reed RM activates the resins regeneration step through a mechanical and/or electronic programmer, which enables the opening of the regeneration solenoid valve EV1 for the resins regeneration brine to flow through and for the closure of the water flow from the water system through the duct 24.

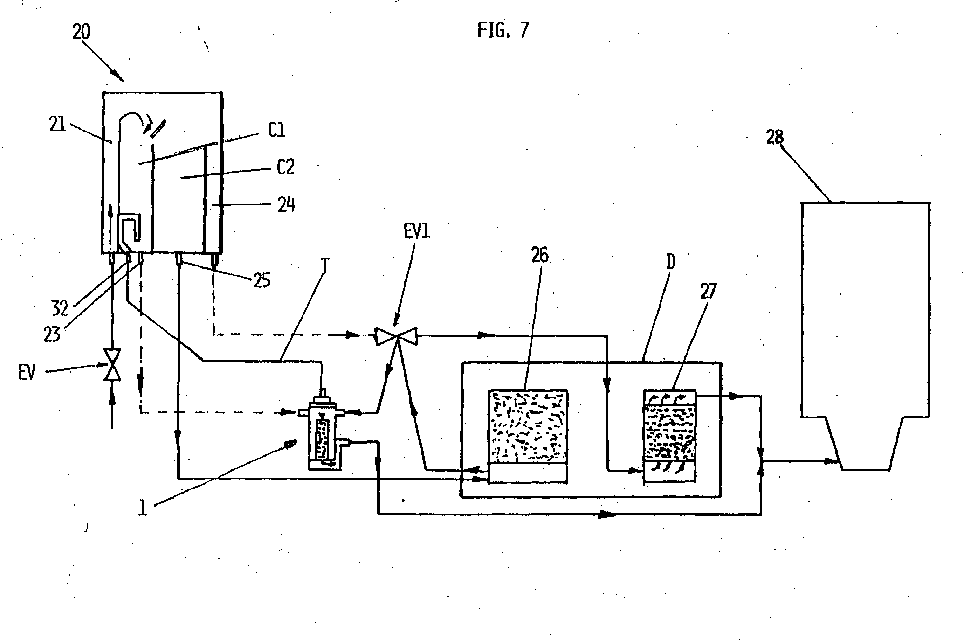

In Fig. 7 the hydraulic circuit for resins regeneration in activated condition is represented by a thick line, whereas the hatched lines represent the deactivated hydraulic circuit for water intake in the tub 28.

Activation of the solenoid valve EV1 allows emptying the water from the chamber C2 of the multifunction device 20; the water from the chamber C2 flows through the salt container 26 and further through the solenoid valve EV1 as brine to the resins container 27 and to the detection device of the resins state 1.

The amount of brine flow through the detection device of the resins state 1 is smaller compared to the amount of brine flow through the resins container 27; this smaller amount of brine flow through the device 1 is due to the smaller flow-rate of the ducts related to the device 1, which contain a smaller amount of resins.

The brine from the salt container 26 being introduced in the device 1 through the passage 20 of the duct 21 behaves like the water flowing from the water system, i.e. it fills the chamber 3A causing an upward thrust of the elastic membrane 10, which entrains the rod 16 with the base 14 and magnet 15, allowing fluctuation of the sample resins 12 for their better mixing with the brine, favouring their regeneration.

Upon emptying the chamber C2 and consequent interruption of the brine flow in the device 1, the elastic membrane 10 no longer under the thrust of the water contained in the chamber 3A will let the base 14 to be lowered.

The base 14 is lowered down to indentation 3C, which will stop it and hinder it from resting on the sample resins 12.

The base 14 will stop before resting on the sample resins 12 due the height reached by the latter being lower than their height prior to regeneration; this reduction is actually due to the osmotic pressure exerted by the sodium ions in excess on the resins; therefore, the base 14 should run a path such to cause an excessive downward distortion of the elastic membrane 10 with a consequent risk of damaging it.

As known, following a likely wait step, during which the resins may remain in contact with the brine, the programmer will start at least a resins wash step for removing the exceeding sodium ions; this is obtained activating the solenoid valve EV for water intake from the water system, which is flown through the chamber C1 to the detection device of the resins state 1 and through the duct 24 to the resins container 26. Obviously, the solenoid valve EV will be enabled for the flow from the water system, not for the brine.

Also in this instance, the water from the chamber C1 supplying the detection device of the resins state 1 to fill the chamber 3A will cause an upward movement of the membrane 10, with a consequent displacement of the base 14, so the resins can fluctuate and execute a most complete washing.

At the end of the resins wash, the elastic membrane 10 no longer stressed by the water contained in the chamber 3A, will let the base 14 to rest on the sample resins 12 and compact them in the new height position reached by them.

In fact, eliminating the exceeding sodium ions, the osmotic pressure is reduced and the sample resins will increase their volume; this volume increase of the resins causes an upward displacement of the movable element 13 and relevant magnetic element 15 up to a position where the reed RM is outside the magnetic field of the magnetic element, so it can go back to the open condition.

From the above description and annexed claims the features of the present invention are clear, and also its advantages are clear.

As it can be noticed from the above description, the device utilized in the system according to the present invention has a simple, compact and cost effective manufacture.

In particular, the advantages of the detection device of the resins state 1 are:
- the movable element can be moved without the use of electric components through the water supply procedure of the device;
- displacement of the movable element is executed automatically during the wash water intake step and the resins regeneration and wash steps;
- the use of an electromechanical programmer does not require an additional cam;
- no electric wiring is required for the motion of the movable element;
- the wash water flowing through the device can be dosed;
- the same exhaustion degree with a high operation reliability can be substantially had for both the sample resins and wash water softening resins.

Obviously, many changes are possible for the man skilled in the art to the device and procedures object of the present invention, without departing from the novelty principles of the inventive idea.

For instance, the detection device of the resins state 1 may have a second reed located symmetrically on the side opposite to the side bearing the reed RM, but at different height.

According to this solution, both detection reeds will ensure generation, either on their own or jointly, of a higher number of information compared to the case described above; for this reason, the device with two reeds is more suitable to be associated to an electronic control device for collecting and transfer information to the various components or user of the washing machine.

These information are already described in the patent application IT TO2000A000012 in the name of the same applicant of the present patent and will not be further described herein.

According to another possible implementation, a Hall effect sensor may be provided instead of a reed.

It is clear that other changes and/or applications are possible, without departing from the novelty principles of the inventive idea, and it is also clear that in practical actuation of the present invention the components may often differ in form and size from the ones described above by way of example, and be replaced with technical equivalent elements.

## Claims

1. A detection device of the resins state (1) used in a water softening system for operation of a user apparatus, in particular a household washing machine, which device uses sample resins (12) reducing their softening capacity depending on the water being treated, said detection device comprising a movable element (13) resting on said sample resins (12) in order to compact them and to detect said resins state by detecting the position of said movable element (13), said movable element (13) being capable of taking at least a first operating position, in which said movable element (13) delimits a compartment for containing said sample resins (12), said detection device (1) further comprising actuating means (10), solidly connected to said movable element (13), for moving said movable element (13) to at least a respective second operating position, in which the volume of said compartment is greater than in the first position, in order to facilitate mixing of said sample resins (12) with a water flow,
**characterized in that,**
said actuating means (10) are thrust upwards by the water flow during the water intake steps of said detection device (1).

2. A device according to claim 1, **characterized in that** said actuating means (10) comprise an elastic element (10), in particular an elastic membrane.

3. A device according to the previous claim, **characterized in that** said elastic membrane (10) is substantially in the form of a circular ring with a semi-circular section.

4. A device according to claim 1, **characterized in that** said detection device (1) comprises
- a magnetic element (15), in particular a permanent magnet, capable of changing its own position depending on the volume change of said sample resins (12),
- sensing means (RM) for detecting the position of said magnetic element (15).

5. A device according to claim 1, **characterized in that** said detection device (1) has a body (2) with a hollow cylindrical portion (3), in which a first portion (3B) of said hollow cylindrical portion (3) contains said sample resins (12).

6. A device according to claim 5, **characterized in that** said hollow cylindrical portion (3) is closed on a first end by a first cover (7) and on a second end by a second cover (8).

7. A device according to claims 2 and 6, **characterized in that** the outer edges of said elastic membrane (10) are locked between the edges of said second end of said hollow cylindrical portion (3) and the edges of said second cover (8).

8. A device according to claim 3, **characterized in that** the inner edges of said elastic membrane (10) are tightly connected to the end of said movable element (13).

9. A device according to claim 5, **characterized in that** said hollow cylindrical portion (3) is hydraulically connected to a multifunctional device (20), in order to bring a portion of the water used for a wash step in contact with said sample resins (12) before being introduced in a wash tub (28).

10. A device according to claim 5, **characterized in that** a recess (4) outside said hollow cylindrical portion (3) is hydraulically connected to the inside of said hollow cylindrical portion (3), in particular through slits being apt to let the water, but not the sample resins (12) flow through.

11. A device according to the previous claim, **characterized in that** said recess (4) is hydraulically connected to said wash tub (28) through a first hole (5) of a first tube (6).

12. A device according to claim 5, **characterized in that** said first portion (3B) contains a stop of the downward movement of said movable element (13).

13. A device according to claims 4 and 5, **characterized in that** said magnetic element (15) is associated to said movable element (13) and the latter is located in said hollow cylindrical portion (3), in particular in contact with said sample resins (12) and being apt to change its position following a volume change of the latter.

14. A device according to claims 2 and 13, **characterized in that** a second portion (3A) of said hollow cylindrical portion (3) is delimited between said magnetic element (15) and said elastic membrane (10).

15. A device according to claims 9 and 14, **characterized in that** said second portion (3A) has a first hole (18) for said hydraulic connection through a tube (19).

16. A device according to the previous claim, **characterized in that** said second portion (3A) has a second hole (20) for hydraulic connection to a wash water softening device (D), in particular to a salt container (26).

17. A device according to the previous claim, **characterized in that** said hydraulic connection is obtained through intercepting means (EV1).

18. A device according to the previous claim, **characterized in that** said intercepting means comprise a solenoid valve (EV1), in particular a four-ways solenoid valve.

19. A device according to claims 2 and 6, **characterized in that** a chamber (17) is delimited between said elastic membrane (10) and the inside of said second cover (8), said chamber (17) connecting outside of the device (1) through a tube (11).

20. A device according to claim 9, **characterized in that** said multifunctional device (20) comprises a first duct (21) being apt to convey water from the water system inside said multifunctional device (20) through second intercepting means (EV), a first chamber (C1) being apt to collect the water from said first duct (21), a second chamber (C2) being apt to collect the water overflowing from said first chamber (C1), a second duct (24) being apt to convey in the wash tub (28) the water overflowing from said second chamber (C2) through a softening resins container (27).

21. A device according to claims 15 and 20, **characterized in that** said first chamber (C1) is hydraulically connected to said first hole (18) in said second portion (3A).

22. A device according to claims 16 and 20, **characterized in that** said second chamber (C2) is hydraulically connected to said salt container (26).

23. A device according to claim 20, **characterized in that** said second duct (24) is hydraulically connected to said container of the softening resins (27) through said first intercepting means (EV1).

24. A device according to claim 20, **characterized in that** a third duct (30) is provided in said first chamber (C1), substantially in the form of an upturned siphon, with a first (30A) and a second (30B) vertical lengths joined on top by a horizontal length (30C).

25. A device according to claims 19 and 24, **characterized in that** the end of said first vertical length (30A) has an opening (31) to the outside of said multifunctional device (20) being apt to be connected to said tube (11) by means of a small tube (T).

26. A device according to claim 24, **characterized in that** the end of said second vertical length (30B) has an opening (33) with a smaller diameter than the diameter of said third duct (30), in particular said opening (33) being connected to the environment of said first chamber (C1) through a tubular extension (34) located on the end of said second vertical length (30B).

27. A device according to the previous claim, **characterized in that** a cylindrical element (35) is provided in said tubular extension (34), in particular sliding in said tubular extension (34), and substantially in the form of a hollow cylinder closed on one end.

28. A device according to the previous claim, **characterized in that** the closed end of said cylindrical element (35) has a small block (36) substantially in a tapered form, being apt to close said opening (33) in a working condition.

29. A device according to claim 27, **characterized in that** it provides a stop (37) of said cylindrical element (35) in a rest condition.

30. A device according to at least one of the previous claims, **characterized in that** said movable element (13) has a base (14) substantially in the form of a pan with a diameter to match with and slide within said hollow cylindrical portion (3).

31. A device according to at least one of the previous claims, **characterized in that** said movable element (13) is associated to a rod (16).

32. A device according to at least one of the previous claims, **characterized in that** said magnetic element (15) is associated to said movable element (13).

33. A device according to claim 4, **characterized in that** said sensing means (RM) are positioned slidewise and outside said hollow cylindrical portion (3).

34. A device according to claim 33, **characterized in that** said sensing means (RM) are reed (RM) or Hall effect sensors.

35. A device according to one or more of the previous claims, **characterized in that** said tube (19) has intercepting means for the brine from said second hole (20).

36. A device according to the previous claim, **characterized in that** said intercepting means comprise a nonreturn valve.

37. A method for water supply to a detection device (1) of the resins state in a water softening system for operation of a user apparatus, in particular a household washing machine, which provides the use of resins (12) reducing their own softening capacity depending on the volume of water being treated, said system providing at least:
- softening steps, during which some of the water to be softened required by said user apparatus is brought in contact with said resins (12), and
- regeneration steps of the softening capacity of said resins (12), during which an aqueous solution containing a regenerating agent is added to said resins (12), and
- wash steps of said resins (12) during which a water flow for the washing of the resins (12) previously regenerated is added to said resins (12),
said detection device (1) comprising a movable element (13) resting on said sample resins (12) in order to compact them and to detect said resins state by detecting the position of said movable element (13),
said movable element (13) being capable of taking at least a first operating position, in which said movable element (13) delimits a compartment for containing said sample resins (12), said detection device (1) further comprising actuating means (10), solidly connected to said movable element (13), for moving said movable element (13) to at least a respective second operating position, in which the volume of said compartment is greater than in the first position,
**characterized in that,**
during addition of said water to be softened and/or during addition of said aqueous solution containing a regenerating agent and/or during addition of the water for washing said resins (12), said actuating means (10) are thrust upwards by the water flow during the water intake steps of said detection device (1), so that a volume increase of the compartment containing said sample resins (12) is obtained through the displacement of the movable element (13) during said additions, in order to favour the mixing of said sample resins (12) with the water flow added to said detection device (1) of the resins state.

38. A method according to the previous claim, **characterized in that** said addition of said portion of water to be softened and/or wash water of the resins is directly obtained from the hydraulic system through a first chamber (C1) of a multifunctional device (20).

39. A method according to claim 37, **characterized in that** the volume of said portion of water to be softened is dosed through said first chamber (C1) of said multifunctional device (20).

40. A method according to claim 37, **characterized in that** said addition of said aqueous solution containing a regenerating agent is directly obtained through a salt container (26) pertaining to a softening device (D) of the wash water, in particular through intercepting means (EV1).

41. A method according to one or more of the previous claims, **characterized in that** said volume increase of the compartment containing said sample resins (12) is obtained during the whole water intake time into said device (1).

42. A method according to claim 40, **characterized in that** said intercepting means (EV1) are apt for the through-flow and interception of said aqueous solution containing a regenerating agent and/or said wash water required by said user apparatus.

43. A water softening system for operation of a user apparatus, in particular a household washing machine, **characterized in that** it comprises a detection device of the resins state (1) according to one or more of the previous claims.

44. A household washing machine, in particular a dishwasher, comprising and/or utilizing the water softening system and/or the detection device, according to one or more of the previous claims

45. A household washing machine, in particular a dishwasher, implementing the method and/or methods according to one or more of the previous claims.

## Patentansprüche

1. Vorrichtung zum Detektieren des Harzzustands (1), die in einem Wasserenthärtesystem zum Betreiben einer Benutzereinrichtung, insbesondere eines Haushaltswaschgerätes, verwendet wird, wobei das Wasserenthärtesystem Probeharze (12) verwendet, die ihre Enthärtekapazität in Abhängigkeit von dem Wasser, das behandelt worden ist, reduzieren, wobei die Vorrichtung zum Detektieren ein bewegliches Element (13) aufweist, das auf den Probeharzen (12) aufliegt, um sie zu verdichten und den Harzzustand durch Detektieren der Position des beweglichen Elements (13) zu detektieren, wobei das bewegliche Element (13) fähig ist, zumindest eine erste Betriebsposition einzunehmen, in der das bewegliche Element (13) einen Raum zum Aufnehmen der Probeharze (12) begrenzt, wobei die Vorrichtung zum Detektieren (1) des Weiteren Betätigungsmittel (10) aufweist, die fest mit dem beweglichen Element (13) verbunden sind, um das bewegliche Element (13) zu zumindest einer entsprechenden zweiten Betriebsposition zu bewegen, in der das Volumen des Raumes größer ist als in der ersten Position, um ein Mischen der Probeharze (12) mit einem Wasserstrom zu erleichtern,
**dadurch gekennzeichnet, dass**
die Betätigungsmittel (10) durch den Wasserstrom während der Wassereinlaufschritte der Vorrichtung zum Detektieren (1) nach oben gedrängt werden.

2. Vorrichtung nach Anspruch 1, **dadurch gekennzeichnet, dass** die Betätigungsmittel (10) ein elastisches Element (10) aufweisen, insbesondere eine elastische Membran.

3. Vorrichtung gemäß dem vorherigen Anspruch, **dadurch gekennzeichnet, dass** die elastische Membran (10) im Wesentlichen die Form eines kreisförmigen Ringes mit einem halbkreisförmigen Abschnitt aufweist.

4. Vorrichtung nach Anspruch 1, **dadurch gekennzeichnet, dass** die Vorrichtung zum Detektieren (1) des Weiteren aufweist:
- ein magnetisches Element (15), insbesondere einen Permanentmagneten, das fähig ist, seine eigene Position in Abhängigkeit von der Volumenänderung der Probeharze (12) zu verändern,
- Sensormittel (RM) zum Detektieren der Position des magnetischen Elementes (15).

5. Vorrichtung nach Anspruch 1, **dadurch gekennzeichnet, dass** die Vorrichtung zum Detektieren (1) einen Körper (2) mit einem hohlen zylindrischen Abschnitt (3) aufweist, in dem ein erster Abschnitt (3B) des hohlen zylindrischen Abschnittes (3) die Probeharze (12) enthält.

6. Vorrichtung nach Anspruch 5, **dadurch gekennzeichnet, dass** der hohle zylindrische Abschnitt (3) an einem ersten Ende durch eine erste Abdeckung (7) und an einem zweiten Ende durch eine zweite Abdeckung (8) geschlossen ist.

7. Vorrichtung nach den Ansprüchen 2 und 6, **dadurch gekennzeichnet, dass** die äußeren Ränder der elastischen Membran (10) zwischen den Rändern des zweiten Endes des hohlen zylindrischen Abschnitts (3) und den Rändern der zweiten Abdeckung (8) eingeschlossen sind.

8. Vorrichtung nach Anspruch 3, **dadurch gekennzeichnet, dass** die inneren Ränder der elastischen Membran (10) fest mit dem Ende des beweglichen Elementes (13) verbunden sind.

9. Vorrichtung nach Anspruch 5, **dadurch gekennzeichnet, dass** der hohle zylindrische Abschnitt (3) hydraulisch mit einer multifunktionalen Einrichtung (20) verbunden ist, um einen Teil des Wassers, das für einen Waschschritt verwendet wird, mit den Probeharzen (12) in Kontakt zu bringen, bevor er in einen Waschbereich (28) eingeleitet wird.

10. Vorrichtung nach Anspruch 5, **dadurch gekennzeichnet, dass** eine Vertiefung (4), die außerhalb des hohlen zylindrischen Abschnitts (3) angeordnet ist, hydraulisch mit der Innenseite des hohlen zylindrischen Abschnitts (3) verbunden ist, insbesondere durch Schlitze, die angepasst sind, um Wasser, aber nicht die Probeharze (12), durchströmen zu lassen.

11. Vorrichtung nach dem vorherigen Anspruch, **dadurch gekennzeichnet, dass** die Vertiefung (4) hydraulisch mit dem Waschbereich (28) durch eine erste Öffnung (5) einer ersten Röhre (6) verbunden ist.

12. Vorrichtung nach Anspruch 5, **dadurch gekennzeichnet, dass** der erste Abschnitt (3B) ein Stoppelement für die Abwärtsbewegung des beweglichen Elements (13) aufweist.

13. Vorrichtung nach den Ansprüchen 4 und 5, **dadurch gekennzeichnet, dass** das magnetische Element (15) dem beweglichen Element (13) zugeordnet ist und dass das Letztere in dem hohlen zylindrischen Abschnitt (3) angeordnet ist, insbesondere in Kontakt stehend mit den Probeharzen (12) und so angepasst, dass es einer Volumenänderung der Letzteren folgend seine Position verändert.

14. Vorrichtung nach den Ansprüchen 2 und 13, **dadurch gekennzeichnet, dass** ein zweiter Abschnitt (3A) des hohlen zylindrischen Abschnittes (3) zwischen dem magnetischen Element (15) und der elastischen Membran (10) begrenzt ist.

15. Vorrichtung nach den Ansprüchen 9 und 14, **dadurch gekennzeichnet, dass** der zweite Abschnitt (3A) eine erste Öffnung (18) zum hydraulischen Verbinden durch eine Röhre (19) aufweist.

16. Vorrichtung nach dem vorherigen Anspruch, **dadurch gekennzeichnet, dass** der zweite Abschnitt (3A) eine zweite Öffnung (20) für eine hydraulische Verbindung mit einer Waschwasserenthärteeinrichtung (D), insbesondere mit einem Salzbehälter (26), aufweist.

17. Vorrichtung nach dem vorherigen Anspruch, **dadurch gekennzeichnet, dass** die hydraulische Verbindung durch Unterbrechungsmittel (EV1) erreicht wird.

18. Vorrichtung nach dem vorherigen Anspruch, **dadurch gekennzeichnet, dass** die Unterbrechungsmittel ein Magnetventil (EV1) aufweisen, insbesondere ein Vier-Wege-Magnetventil.

19. Vorrichtung nach den Ansprüchen 2 und 6, **dadurch gekennzeichnet, dass** eine Kammer (17) zwischen der elastischen Membran (10) und der Innenseite der zweiten Abdeckung (8) begrenzt ist, wobei die Kammer (17) mit der Umgebung der Vorrichtung (1) durch eine Röhre verbunden ist (11).

20. Vorrichtung nach Anspruch 9, **dadurch gekennzeichnet, dass** die multifunktionale Einrichtung (20) eine erste Führung (21), die angepasst ist, um Wasser von dem Wassersystem innerhalb der multifunktionalen Einrichtung (20) durch zweite Unterbrechungsmittel (EV) zu befördern, eine erste Kammer (C1), die angepasst ist, um das Wasser von der ersten Führung (21) zu sammeln, eine zweite Kammer (C2), die angepasst ist, um das Wasser, das von der ersten Kammer (C1) überströmt, zu sammeln, eine zweite Führung (24), die angepasst ist, um das Wasser, das von der zweiten Kammer (C2) überströmt, durch einen Enthärteharzebehälter (27) in den Waschbereich (28) zu befördern.

21. Vorrichtung nach den Ansprüchen 15 und 20, **dadurch gekennzeichnet, dass** die erste Kammer (C1) hydraulisch mit der ersten Öffnung (18) in dem zweiten Abschnitt (3A) verbunden ist.

22. Vorrichtung nach den Ansprüchen 16 und 20, **dadurch gekennzeichnet, dass** die zweite Kammer (C2) hydraulisch mit dem Salzbehälter (26) verbunden ist.

23. Vorrichtung nach Anspruch 20, **dadurch gekennzeichnet, dass** die zweite Führung (24) hydraulisch mit dem Behälter der Enthärteharze (27) durch die ersten Unterbrechungsmittel (EV1) verbunden ist.

24. Vorrichtung nach Anspruch 20, **dadurch gekennzeichnet, dass** eine dritte Führung (30) in der ersten Kammer (C1) vorhanden ist, im Wesentlichen in der Form eines nach oben gewandten Siphons, mit einem ersten vertikalen Längenabschnitt (30A) und einem zweiten vertikalen Längenabschnitt (30B), die oben durch einen horizontalen Längenabschnitt (30C) verbunden sind.

25. Vorrichtung nach den Ansprüchen 19 und 24, **dadurch gekennzeichnet, dass** das Ende des ersten vertikalen Längenabschnitts (30A) eine Öffnung (31) zu dem Äußeren der multifunktionalen Einrichtung (20) hin aufweist, die angepasst ist, um mit der Röhre (11) durch eine kleine Röhre (T) verbunden zu werden.

26. Vorrichtung nach Anspruch 24, **dadurch gekennzeichnet, dass** das Ende des zweiten vertikalen Längenabschnitts (30B) eine Öffnung (33) mit einem Durchmesser aufweist, der kleiner ist als der Durchmesser der dritten Führung (30), wobei die Öffnung (33) insbesondere mit der Umgebung der ersten Kammer (C1) durch eine röhrenförmige Erweiterung (34) verbunden ist, die an dem Ende des zweiten vertikalen Längenabschnitts (30B) angeordnet ist.

27. Vorrichtung nach dem vorherigen Anspruch, **dadurch gekennzeichnet, dass** ein zylindrisches Element (35) in der röhrenförmigen Erweiterung (34) bereitgestellt ist, wobei das zylindrische Element (35) insbesondere in der röhrenförmigen Erweiterung (34) gleitet und im Wesentlichen die Form eines an einem Ende geschlossenen Hohlzylinders aufweist.

28. Vorrichtung nach dem vorherigen Anspruch, **dadurch gekennzeichnet, dass** das geschlossene Ende des zylindrischen Elementes (35) einen kleinen Block (36) im Wesentlichen in einer konischen Form aufweist, der angepasst ist, um die Öffnung (33) in einem Arbeitszustand zu verschließen.

29. Vorrichtung nach Anspruch 27, **dadurch gekennzeichnet, dass** die Vorrichtung ein Stoppelement (37) für das zylindrische Element (35) in einem Ruhezustand aufweist.

30. Vorrichtung nach zumindest einem der vorherigen Ansprüche, **dadurch gekennzeichnet, dass** das bewegliche Element (13) eine Basis (14) im Wesentlichen in der Form einer Wanne mit einem Durchmesser aufweist, der so angepasst ist, dass er zu dem hohlen zylindrischen Abschnitt (3) passt und innerhalb desselben gleitet.

31. Vorrichtung nach einem der vorherigen Ansprüche, **dadurch gekennzeichnet, dass** das bewegliche Element (13) einem Stab (16) zugeordnet ist.

32. Vorrichtung nach zumindest einem der vorherigen Ansprüche, **dadurch gekennzeichnet, dass** das magnetische Element (15) dem beweglichen Element (13) zugeordnet ist.

33. Vorrichtung nach Anspruch 4, **dadurch gekennzeichnet, dass** die Sensormittel (RM) gleitend und außerhalb des hohlen zylindrischen Abschnitts (3) angeordnet sind.

34. Vorrichtung nach Anspruch 33, **dadurch gekennzeichnet, dass** die Sensormittel (RM) Reed (RM)- oder Hall-Effekt-Sensoren sind.

35. Vorrichtung nach einem oder mehreren der vorherigen Ansprüche, **dadurch gekennzeichnet, dass** die Röhre (19) Unterbrechungsmittel für die Lauge aus der zweiten Öffnung (20) aufweist.

36. Vorrichtung nach dem vorherigen Anspruch, **dadurch gekennzeichnet, dass** die Unterbrechungsmittel ein Rückschlagventil aufweisen.

37. Verfahren zur Wasserzuführung zu einer Vorrichtung (1) zum Detektieren des Harzzustands in einem Wasserenthärtesystem zum Betrieb einer Benutzereinrichtung, insbesondere eines Haushaltswaschgerätes, das die Verwendung von Harzen (12) bereitstellt, die ihre eigene Enthärtekapazität in Abhängigkeit von dem Volumen des Wassers, das behandelt worden ist, reduzieren, wobei das System zumindest bereitstellt:
- Enthärteschritte, während der etwas Wasser des zu enthärtenden Wassers, das von der Benutzereinrichtung benötigt wird, in Kontakt mit den Harzen (12) gebracht wird, und
- Schritte zum Regenerieren der Enthärtekapazität der Harze (12), während der eine wässrige Lösung, die ein Regenerationsmittel enthält, den Harzen (12) zugeführt wird, und
- Schritte zum Waschen der Harze (12), während der ein Wasserstrom für das Waschen der Harze (12), die zuvor regeneriert worden sind, den Harzen (12) zugeführt wird,
wobei die Vorrichtung (1) zum Detektieren ein bewegliches Element (13) aufweist, dass auf den Probeharzen (12) liegt, um sie zu verdichten und den Zustand der Harze durch Detektieren der Position des beweglichen Elementes (13) zu detektieren,
wobei das bewegliche Element (13) fähig ist, zumindest eine erste Betriebsposition einzunehmen, in der das bewegliche Element (13) einen Raum zum Aufnehmen der Probeharze (12) begrenzt, wobei die Vorrichtung (1) zum Detektieren des Weiteren Betätigungsmittel (10) aufweist, die fest mit dem beweglichen Element (13) verbunden sind, zum Bewegen des beweglichen Elementes (13) zu zumindest einer entsprechenden zweiten Betriebsposition, in der das Volumen des Raumes größer ist als in der ersten Position,
**dadurch gekennzeichnet, dass**
während des Zuführens des zu enthärtenden Wassers und/oder während des Zuführens der wässrigen Lösung, die ein Regenerationsmittel enthält, und/oder während des Zuführens des Wassers zum Waschen der Harze (12), die Betätigungsmittel (10) durch den Wasserstrom während der Wassereinlaufschritte der Vorrichtung (1) zum Detektieren nach oben gedrängt werden, so dass eine Volumenvergrößerung des Raumes, der die Probeharze (12) enthält, durch die Verschiebung des beweglichen Elementes (13) während der Zuführungen erreicht wird, um das Mischen der Probeharze (12) mit dem Wasserstrom zu begünstigen, der zu der Vorrichtung (1) zum Detektieren des Harzzustands geführt wird.

38. Verfahren nach dem vorherigen Anspruch, **dadurch gekennzeichnet, dass** das Hinzufügen des Teils von zu enthärtendem Wasser und/oder von Waschwasser der Harze direkt von dem hydraulischen System durch eine erste Kammer (C1) einer multifunktionalen Einrichtung (20) erreicht wird.

39. Verfahren nach Anspruch 37, **dadurch gekennzeichnet, dass** das Volumen des Teils von zu enthärtendem Wasser durch die erste Kammer (C1) einer multifunktionalen Einrichtung (20) dosiert ist.

40. Verfahren nach Anspruch 37, **dadurch gekennzeichnet, dass** das Hinzufügen der wässrigen Lösung, die ein Regenerationsmittel enthält, direkt durch einen Salzbehälter (26), der zu einer Enthärteeinrichtung (D) des Waschwassers gehört, insbesondere durch Unterbrechungsmittel (EV1) erreicht wird.

41. Verfahren nach einem oder mehreren der vorherigen Ansprüche, **dadurch gekennzeichnet, dass** die Volumenvergrößerung des Raumes, der die Probeharze (12) enthält, während der gesamten Wassereinlaufzeit in die Vorrichtung (1) erreicht wird.

42. Verfahren nach Anspruch 40, **dadurch gekennzeichnet, dass** die Unterbrechungsmittel (EV1) für den Durchfluss und das Unterbrechen der wässrigen Lösung, die ein Regenerationsmittel und/oder das von der Benutzereinrichtung benötigte Waschwassers enthält, angepasst sind.

43. Wasserenthärtesystem zum Betreiben einer Benutzereinrichtung, insbesondere eines Haushaltswaschgerätes, **dadurch gekennzeichnet, dass** es eine Vorrichtung zum Detektieren des Harzzustands (1) gemäß einem oder mehreren der vorherigen Ansprüche aufweist.

44. Haushaltswaschgerät, insbesondere Geschirrspülmaschine, die das Wasserenthärtesystem und/oder die Vorrichtung zum Detektieren gemäß einem oder mehrerer der vorherigen Ansprüche aufweist und/oder verwendet.

45. Haushaltswaschgerät, insbesondere Geschirrspülmaschine, in der das Verfahren und/oder die Verfahren gemäß einem oder mehrerer der vorherigen Ansprüche implementiert sind.

## Revendications

1. Dispositif de détection de l'état (1) de résines utilisées dans un système d'adoucissement d'eau pour le fonctionnement d'un appareil d'utilisateur, en particulier une machine à laver domestique,lequel dispositif utilise des résines échantillons (12) en réduisant leur capacité adoucissante en fonction de l'eau à traiter, ledit dispositif de détection comprenant un élément mobile (13) reposant sur lesdites résines échantillons (12) afin de les compacter et de détecter ledit état des résines en détectant la position dudit élément mobile (13), ledit élément mobile (13) étant capable d'assumer au moins une première position de fonctionnement, dans laquelle ledit élément mobile (13) délimite un compartiment pour contenir lesdites résines échantillons (12), ledit dispositif de détection (1) comprenant en outre des moyens d'actionnement (10), raccordés solidement audit élément mobile (13), pour déplacer ledit élément mobile (13) dans au moins une deuxième position de fonctionnement respective, dans laquelle le volume dudit compartiment est supérieur à celui de la première position, afin de faciliter le mélange desdites résines échantillons (12) avec un écoulement d'eau, **caractérisé en ce que** :
lesdits moyens d'actionnement (10) sont poussés vers le haut par l'écoulement d'eau pendant les étapes d'admission d'eau dudit dispositif de détection (1).

2. Dispositif selon la revendication 1, **caractérisé en ce que** lesdits moyens d'actionnement (10) comprennent un élément élastique (10), en particulier une membrane élastique.

3. Dispositif selon la revendication précédente, **caractérisé en ce que** ladite membrane élastique (10) se présente sensiblement sous la forme d'un anneau circulaire avec une section semi-circulaire.

4. Dispositif selon la revendication 1, **caractérisé en ce que** ledit dispositif de détection (1) comprend :
- un élément magnétique (15), en particulier un aimant permanent, capable de changer sa propre position en fonction du changement de volume desdites résines échantillons (12), et
- des moyens de détection (RM) pour détecter la position dudit élément magnétique (15).

5. Dispositif selon la revendication 1, **caractérisé en ce que** ledit dispositif de détection (1) a un corps (2) avec une partie cylindrique creuse (3), dans laquelle une première partie (3B) de ladite partie cylindrique creuse (3) contient lesdites résines échantillons (12).

6. Dispositif selon la revendication 5,
**caractérisé en ce que** ladite partie cylindrique creuse (3) est fermée, sur une première extrémité, par un premier couvercle (7) et, sur une seconde extrémité, par un second couvercle (8).

7. Dispositif selon les revendications 2 et 6, **caractérisé en ce que** les bords externes de ladite membrane élastique (10) sont verrouillés entre les bords de ladite seconde extrémité de ladite partie cylindrique creuse (3) et les bords dudit second couvercle (8).

8. Dispositif selon la revendication 3, **caractérisé en ce que** les bords internes de ladite membrane élastique (10) sont raccordés étroitement à l'extrémité dudit élément mobile (13).

9. Dispositif selon la revendication 5, **caractérisé en ce que** ladite partie cylindrique creuse (3) est raccordée hydrauliquement à un dispositif multifonctionnel (20) afin de mettre une partie de l'eau utilisée pour une étape de lavage en contact avec lesdites résines échantillons (12) avant d'être introduite dans une cuve de lavage (28).

10. Dispositif selon la revendication 5, **caractérisé en ce qu'**un évidement (4) extérieur à ladite partie cylindrique creuse (3) est raccordé hydrauliquement à l'intérieur de ladite partie cylindrique creuse (3), en particulier à travers des fentes qui sont à même de laisser passer l'eau, mais pas les résines échantillons (12).

11. Dispositif selon la revendication précédente, **caractérisé en ce que** ledit évidement (4) est raccordé hydrauliquement à ladite cuve d'eau (28) via un premier trou (5) d'un premier tube (6).

12. Dispositif selon la revendication 5, **caractérisé en ce que** ladite première partie (3B) contient un arrêt du mouvement descendant dudit élément mobile (13).

13. Dispositif selon les revendications 4 et 5, **caractérisé en ce que** ledit élément magnétique (15) est associé audit élément mobile (13) et ce dernier est situé dans ladite partie cylindrique creuse (3), en particulier en contact avec lesdites résines échantillons (12) et étant apte à changer sa position à la suite d'un changement de volume de ces dernières.

14. Dispositif selon les revendications 2 et 13, **caractérisé en ce qu'**une seconde partie (3A) de ladite partie cylindrique creuse (3) est délimitée entre ledit élément magnétique (15) et ladite membrane élastique (10) .

15. Dispositif selon les revendications 9 et 14, **caractérisé en ce que** ladite seconde partie (3A) a un premier trou (18) pour ledit raccordement hydraulique à travers un tube (19).

16. Dispositif selon la revendication précédente, **caractérisé en ce que** ladite seconde partie (3A) a un second trou (20) pour le raccordement hydraulique à un dispositif d'adoucissement d'eau de lavage (D), en particulier, à un récipient de sel (26).

17. Dispositif selon la revendication précédente, **caractérisé en ce que** ledit raccordement hydraulique est obtenu via des moyens d'interception (EV1).

18. Dispositif selon la revendication précédente, **caractérisé en ce que** lesdits moyens d'interception comprennent une valve à solénoïde à quatre voies.

19. Dispositif selon les revendications 2 et 6, **caractérisé en ce qu'**une chambre (17) est délimitée entre ladite membrane élastique (10) et l'intérieur dudit second couvercle (8), ladite chambre (17) se raccordant à l'extérieur du dispositif (1) via un tube (11).

20. Dispositif selon la revendication 9, **caractérisé en ce que** ledit dispositif multifonctionnel (20) comprend une première canalisation (21) qui est à même de transporter de l'eau du système d'eau à l'intérieur dudit dispositif multifonctionnel (20) à travers des seconds moyens d'interception (EV),une première chambre (C1) étant à même de recueillir l'eau de ladite première canalisation (21),une seconde chambre (C2) étant à même de recueillir l'eau débordant de ladite première chambre (C1), une deuxième canalisation (24) étant à même de transporter dans la cuve d'eau (28) l'eau débordant de ladite seconde chambre (C2) via un récipient de résines adoucissantes (27).

21. Dispositif selon les revendications 15 et 20, **caractérisé en ce que** ladite première chambre (C1) est raccordée hydrauliquement audit premier trou (18) dans ladite seconde partie (3A).

22. Dispositif selon les revendications 16 et 20, **caractérisé en ce que** ladite seconde chambre (C2) est raccordée hydrauliquement audit récipient de sel (26).

23. Dispositif selon la revendication 20, **caractérisé en ce que** ladite deuxième canalisation (24) est raccordée hydrauliquement audit récipient des résines adoucissantes (27) via lesdits premiers moyens d'interception (EV1).

24. Dispositif selon la revendication 20, **caractérisé en ce qu'**une troisième canalisation (30) est aménagée dans ladite première chambre (C1), sensiblement sous la forme d'un siphon à l'envers, avec un premier (30A) et un second (30B) tronçons verticaux joints au-dessus par un tronçon horizontal (30C).

25. Dispositif selon les revendications 19 et 24, **caractérisé en ce que** l'extrémité dudit premier tronçon vertical (30A) a une ouverture (31) vers l'extérieur dudit tube multifonctionnel (20) et est à même d'être raccordée audit tube (11) au moyen d'un petit tube (T).

26. Dispositif selon la revendication 24, **caractérisé en ce que** l'extrémité dudit second tronçon vertical (30B) a une ouverture (33) avec un diamètre inférieur au diamètre de ladite troisième canalisation (30), en particulier ladite ouverture (33) étant raccordée à l'environnement de ladite première chambre (C1) via une extension tubulaire (34) située sur l'extrémité dudit deuxième tronçon vertical (30B).

27. Dispositif selon la revendication précédente, **caractérisé en ce qu'**un élément cylindrique (35) est aménagé dans ladite extension tubulaire (34), en particulier coulissant dans ladite extension tubulaire (34) et sensiblement sous la forme d'un cylindre creux fermé sur une extrémité.

28. Dispositif selon la revendication précédente, **caractérisé en ce que** l'extrémité fermée dudit élément cylindrique (35) a un petit bloc (36) sensiblement de forme conique, qui est à même de fermer ladite ouverture (33) dans un état de travail.

29. Dispositif selon la revendication 27, **caractérisé en ce qu'**il comprend un arrêt (37) dudit élément cylindrique (35) dans un état de repos.

30. Dispositif selon au moins l'une des revendications précédentes, **caractérisé en ce que** ledit élément mobile (13) a une base (14) sensiblement sous la forme d'une cuve avec un diamètre pour concorder avec ladite partie cylindrique creuse (3) et y coulisser.

31. Dispositif selon au moins l'une des revendications précédentes, **caractérisé en ce que** ledit élément mobile (13) est associé à une tige (16).

32. Dispositif selon au moins l'une des revendications précédentes, **caractérisé en ce que** ledit élément magnétique (15) est associé audit élément mobile (13).

33. Dispositif selon la revendication 4, **caractérisé en ce que** lesdits moyens de détection (RM) sont positionnés à coulissement et à l'extérieur de ladite partie cylindrique creuse (3).

34. Dispositif selon la revendication 33, **caractérisé en ce que** lesdits moyens de détection (RM) sont des capteurs Reed (RM) ou des capteurs à effet de Hall.

35. Dispositif selon une ou plusieurs des revendications précédentes, **caractérisé en ce que** ledit tube (19) a des moyens d'interception pour la saumure provenant dudit second tube (20).

36. Dispositif selon la revendication précédente, **caractérisé en ce que** lesdits moyens d'interception comprennent un clapet de non retour.

37. Dispositif pour acheminer de l'eau à un dispositif de détection (1) de l'état de résines dans un système d'adoucissement d'eau pour le fonctionnement d'un appareil d'utilisateur, en particulier une machine à laver domestique, qui assure l'utilisation de résines (12) en réduisant leur propre capacité adoucissante en fonction du volume d'eau à traiter, ledit système fournissant au moins :
- des étapes d'adoucissement, pendant lesquelles une partie de l'eau à adoucir nécessaire à l'appareil de l'utilisateur est mise en contact avec lesdites résines (12), et
- des étapes de régénération de la capacité adoucissante desdites résines (12), pendant lesquelles une solution aqueuse contenant un agent régénérant est ajoutée auxdites résines (12), et
- des étapes de lavage desdites résines (12), pendant lesquelles un écoulement d'eau pour le lavage des résines (12) précédemment régénérées est ajouté auxdites résines (12),
ledit dispositif de détection (1) comprenant un élément mobile (13) reposant sur lesdites résines échantillons (12) afin de les compacter et de détecter l'état desdites résines en détectant la position dudit élément mobile (13),
ledit élément mobile (13) étant capable d'assumer au moins une première position de fonctionnement, dans laquelle ledit élément mobile (13) délimite un compartiment pour contenir lesdites résines échantillons (12), ledit dispositif de détection (1) comprenant en outre des moyens d'actionnement (10), raccordés solidement audit élément mobile (13), pour déplacer ledit élément mobile (13) dans au moins une seconde position de fonctionnement respective, le volume dudit compartiment étant supérieur à celui de la première position,
**caractérisé en ce que** :
pendant l'addition de ladite eau à adoucir et/ou pendant l'addition de ladite solution aqueuse contenant un agent régénérant et/ou pendant l'addition de l'eau pour laver lesdites résines (12), lesdits moyens d'actionnement (10) sont poussés vers le haut par l'écoulement d'eau pendant les étapes d'admission d'eau dudit dispositif de détection (1), de sorte qu'une augmentation de volume du compartiment contenant lesdites résines échantillons (12) soit obtenue par le déplacement de l'élément mobile (13) pendant lesdites additions afin de favoriser le mélange desdites résines échantillons (12) avec l'écoulement d'eau ajouté audit dispositif de détection (1) de l'état des résines.

38. Procédé selon la revendication précédente, **caractérisé en ce que** ladite addition de ladite partie d'eau à adoucir et/ou de l'eau de lavage des résines est directement obtenue à partir du système hydraulique à travers une première chambre (C1) d'un dispositif multifonctionnel (20).

39. Procédé selon la revendication 37, **caractérisé en ce que** le volume de ladite partie d'eau à adoucir est dosé à travers ladite première chambre (C1) dudit dispositif multifonctionnel (20).

40. Procédé selon la revendication 37, **caractérisé en ce que** ladite addition de ladite solution aqueuse contenant un agent régénérant est directement obtenue à travers un récipient de sel (26) appartenant au dispositif d'adoucissement (D) de l'eau de lavage, en particulier à travers des moyens d'interception (EV1).

41. Procédé selon une ou plusieurs des revendications précédentes, **caractérisé en ce que** ladite augmentation de volume du compartiment contenant lesdites résines échantillons (12) est obtenue pendant toute la durée d'admission d'eau dans ledit dispositif (1).

42. Procédé selon la revendication 40, **caractérisé en ce que** lesdits moyens d'interception (EV1) sont à même de traverser et d'intercepter ladite solution aqueuse contenant un agent régénérant et/ou ladite eau de lavage nécessaire pour l'appareil d'utilisateur.

43. Système d'adoucissement d'eau pour actionner un appareil d'utilisateur, en particulier une machine à laver domestique, **caractérisé en ce qu'**il comprend un dispositif de détection de l'état (1) des résines selon une ou plusieurs des revendications précédentes.

44. Machine à laver domestique, en particulier lave-vaisselle, comprenant et/ou utilisant le système d'adoucissement d'eau et/ou le dispositif de détection selon une ou plusieurs des revendications précédentes.

45. Machine à laver domestique, en particulier lave-vaisselle, mettant en oeuvre le procédé et/ou les procédés selon une ou plusieurs des revendications précédentes.
